# EUROPÄISCHE PATENTSCHRIFT

(11) **EP 4 546 386 B1**
(45) Veröffentlichungstag und Bekanntmachung des Hinweises auf die Patenterteilung: **13.05.2026**
(21) Anmeldenummer: 24205623.2
(22) Anmeldetag: 09.10.2024
(51) Int. Cl.: H01H 9/54, F16P 3/14, G01V 8/20, G05B 19/048, H01H 47/00, G05B 9/02

(54) **SICHERHEITSSCHALTGERÄT**
SAFETY SWITCH DEVICE
APPAREIL DE COMMUTATION DE SÉCURITÉ

(30) Priorität: 26.10.2023 DE 102023129554
(43) Veröffentlichungstag der Anmeldung: 30.04.2025
(73) Patentinhaber: Pilz GmbH & Co. KG, 73760 Ostfildern (DE)
(72) Erfinder: Preisser, Frank, 73760 Ostfildern (DE)
(74) Vertreter: Witte, Weller & Partner Patentanwälte mbB

(56) Entgegenhaltungen:
- EP-A1- 3 651 312
- DE-A1- 102005 014 125
- DE-A1- 102014 116 188
- DE-A1- 102015 120 666

## Beschreibung

Die vorliegende Erfindung betrifft ein Sicherheitsschaltgerät zum sicherheitsbezogenen Unterbrechen eines Sicherheitsstromkreises.

Sicherheitsschaltgeräte wie zum Beispiel in der DE 10 2014 116188 A1, sind der Ursprung und das Rückgrat der sicheren Automatisierungstechnik. Als eigenständige Geräte überwachen Sicherheitsschaltgeräte Sicherheitsfunktionen wie Not-Aus, Schutztüren, Lichtschranken, Lichtgitter, Schaltmatten und viele mehr. Sicherheitsschaltgeräte führen somit definierte Sicherheitsfunktionen aus und sorgen z.B. für ein kontrolliertes und damit sicheres Stillsetzen einer Bewegung, die Stellungsüberwachung von beweglichen trennenden Schutzeinrichtungen und die Unterbrechung einer Schließbewegung bei einem Eingriff. Sicherheitsschaltgeräte dienen insbesondere der Risikominderung und leiten im Fehlerfall und bei Verletzung von Schutzzonen eine sichere und zuverlässige Reaktion ein. Sicherheitsschaltgeräte sind in nahezu allen Bereichen des Maschinen- und Anlagenbaus anzutreffen, vorrangig dort, wo die Anzahl der Sicherheitsfunktionen überschaubar ist.

Grundsätzlich ist ein Sicherheitsschaltgerät ein Schalter, der in Abhängigkeit eines Eingangssignals einen Sicherheitsstromkreis ein- oder ausschaltet. Die Eingangssignale werden von Sicherheitssensoren oder Sicherheitsgebern (Not-Aus-Taster, Lichtschranke usw.) geliefert und dem Sicherheitsschaltgerät zugeführt, wenn die Sicherheitssensoren einen sicheren Zustand anzeigen, woraufhin das Sicherheitsschaltgerät den Sicherheitsstromkreis schließt. Fehlt eines der Eingangssignale, unterbricht das Sicherheitsschaltgerät den Sicherheitsstromkreis, wodurch in der Regel eine technische Anlage abgeschaltet bzw. deren Anlauf verhindert wird. Alternativ kann die Unterbrechung des Sicherheitsstromkreises auch zu einer anderen Reaktion der technischen Anlage führen, die einen sicheren Zustand herbeiführt.

Im Gegensatz zu einem normalen Schaltrelais darf bei einem Sicherheitsschaltgerät - bei richtiger Beschaltung - weder ein Fehler im Gerät selbst noch ein extern durch Sensor oder Aktor verursachter Fehler zum Verlust der Sicherheitsfunktion führen. Zu diesem Zweck verfügt ein Sicherheitsschaltgerät gegenüber einem normalen Schaltrelais über zusätzliche spezielle Schaltungen oder eine besondere Relaistechnik, um auch im Fehlerfall einen sicheren Schaltvorgang gewährleisten zu können. Der typische Aufbau eines Sicherheitsschaltgerätes ist redundant. Zwei Relais mit zwangsgeführten Kontakten stellen die sicheren Schaltkontakte, die auch als sichere Ausgänge oder Sicherheitsausgänge bezeichnet werden, zur Verfügung. Zwei Eingangskreise steuern jeweils eines der beiden internen Relais an.

Da in der Regel für jede Sicherheitsfunktion ein separates Sicherheitsschaltgerät eingesetzt wird, steigt mit jeder Sicherheitsfunktion einer technischen Anlage die Anzahl der Sicherheitsschaltgeräte und damit auch der Platzbedarf im zugehörigen Schaltschrank. Die steigende Anzahl der benötigten Sicherheitsschaltgeräte führt zu der Forderung, den Platzbedarf eines einzelnen Sicherheitsschaltgerätes zu minimieren. Neben den eigentlichen Schaltelementen sind hierbei die externen Anschlüsse von entscheidender Bedeutung. Je mehr externe Anschlüsse an einem Sicherheitsschaltgerät benötigt werden, desto größer ist der Bauraum, den das Gerät beansprucht.

Es ist daher eine Aufgabe der vorliegenden Erfindung, ein verbessertes Sicherheitsschaltgerät anzugeben, das bei möglichst großem Funktionsumfang einen geringen Bauraum benötigt, einen Verkabelungsaufwand reduziert sowie Fehler bei der Verkabelung vorbeugt.

Die Aufgabe wird gelöst durch ein Sicherheitsschaltgerät mit einem Gehäuse und einer in dem Gehäuse angeordneten Elektronik, wobei die Elektronik zwei Schaltelemente aufweist, die über einen ersten, zweiten, dritten und vierten am Gehäuse befindlichen Anschluss in dem Sicherheitsstromkreis anordenbar sind und diesen redundant schließen, wenn an jedem Schaltelement ein Ansteuerungssignal anliegt, wobei an dem Gehäuse ein fünfter Anschluss und ein sechster Anschluss vorgesehen sind, an die ein erstes Eingangssignal und ein zweites Eingangssignal anlegbar sind, die den Ansteuerungssignalen der Schaltelemente entsprechen, so dass bei Anliegen des ersten und des zweiten Eingangssignals an dem fünften und sechsten Anschluss der Sicherheitsstromkreis geschlossen ist, wobei die in dem Gehäuse angeordnete Elektronik ein weiteres elektrisches Element aufweist, das dazu eingerichtet ist, eine Energie für den eigenen Betrieb einem an dem ersten, den dritten, den fünften und/oder den sechsten Anschluss anliegenden elektrischen Signal zu entnehmen.

Es ist somit eine Idee der vorliegenden Erfindung, ein Sicherheitsschaltgerät bereitzustellen, das dazu eingerichtet ist, einem angeschlossenen Signal elektrische Energie zu entnehmen. Die entnommene Energie wird zum Betrieb eines elektrischen Elements innerhalb des Sicherheitsschaltgeräts verwendet. Mit anderen Worten bezieht ein elektrisches Element einen für seine bestimmungsgemäße Verwendung erforderlichen Strom aus der dem Signal entnommenen Energie.

Das Sicherheitsschaltgerät kann z. B. ein Sicherheitsschaltgerät sein, das speziell für aktive Sensoren ausgelegt ist, die aktiv ein Eingangssignal bereitstellen, dem zusätzlich Energie entnommen werden kann. Die bereitgestellte Energie kann zusätzlich zur Ansteuerung der internen Schaltelemente zur Energieversorgung mindestens eines weiteren Elements des Sicherheitsschaltgeräts beitragen. Auf diese Weise kann vorteilhaft auf externe Anschlüsse für eine separate Energieversorgung verzichtet werden.

Die eingesparten Anschlüsse können dazu beitragen, dass das Sicherheitsschaltgerät in einem Gehäuse mit geringeren Abmessungen angeordnet werden kann als ein vergleichbares Sicherheitsschaltgerät mit externen Versorgungsanschlüssen. Insbesondere kann eine für den erforderlichen Einbauraum relevante Baubreite des Gehäuses reduziert werden. Denkbar ist auch, die freiwerdenden Anschlüsse für andere Funktionen zu verwenden. So ist es z. B. möglich, die Anzahl der sicheren Ausgänge des Sicherheitsschaltgeräts zu erhöhen, ohne dafür ein separates Gerät verwenden zu müssen oder auf ein Gerät zurückzugreifen, das für zusätzliche sichere Ausgänge weitere externe Anschlüsse vorsieht. Die reduzierbare Anzahl externer Anschlüsse kann somit zu einer Verbesserung beitragen, indem bei gleicher Funktionalität ein kleineres Gehäuse verwendet werden kann oder indem bei gleicher Gehäusegröße zusätzliche Funktionalität bereitgestellt werden kann. Ferner vereinfacht die reduzierte Anzahl an externen Anschlüssen die Verdrahtung des Sicherheitsschaltgeräts und beugt Verdrahtungsfehler vor. Damit ist die eingangs gestellte Aufgabe vollständig gelöst.

In einer weiteren Ausgestaltung kann das elektrische Signal das erste und/oder das zweite Eingangssignal sein.

Gemäß dieser Ausgestaltung kann die Energie für das zusätzliche elektrische Element aus einem oder beiden Eingangssignalen entnommen werden. In diesem Fall kann das Sicherheitsschaltgerät für den speziellen Einsatz mit aktiven Sensoren konfiguriert sein. Aktive Sensoren sind hier sichere Sensoren, die ein Eingangssignal unabhängig von einer Spannungsversorgung des Sicherheitsschaltgeräts bereitstellen. Aktive Sensoren können zur Erzeugung des Eingangssignals über ein Ausgangssignalschaltgerät (OSSD; engl. Output signal switching device) verfügen. Ausgangssignalschaltgeräte können als Teil eines sicheren Sensors, insbesondere einer berührungslos wirkenden Schutzeinrichtung (BWS), ein Signal bereitstellen, das fehlersicher unterbrochen wird, wenn der Sensorteil des sicheren Sensors im bestimmungsgemäßen Betrieb anspricht. Durch die Spezialisierung des Sicherheitsschaltgeräts auf aktive Sensoren können Anschlüsse für ausgehende Signale, die für passive Sensoren vorgesehen sind und vom Sicherheitsschaltgerät mit Potenzial versorgt werden, entfallen. Folglich können bei dieser Ausführung neben den Spannungsversorgungsanschlüssen weitere externe Anschlüsse entfallen oder anders belegt werden.

In einer weiteren Ausgestaltung kann das elektrische Signal ein von den Schaltelementen zuschaltendes Potenzial sein.

Bei dieser Ausgestaltung kann somit die Energie für das weitere elektrische Element aus einem an dem ersten oder dritten Anschluss anliegenden Potenzial entnommen werden. Bei dem anliegenden Potenzial handelt es sich um ein Potenzial im Sicherheitsstromkreis, das von den Schaltelementen im sicheren Zustand durchgeschaltet wird und z. B. zur Ansteuerung von Schützen in einer Spannungsversorgung einer von dem Sicherheitsschaltgerät überwachten technischen Anlage dient. Das elektrische Signal kann in diesem Fall eine im industriellen Umfeld häufig verwendete 24 V Gleichspannung sein, die das Sicherheitsschaltgerät zur Energieversorgung des weiteren elektrischen Bauteils verwendet.

In einer weiteren Ausgestaltung kann das elektrische Signal von dem weiteren elektrischen Element galvanisch getrennt sein.

Bei dieser Ausgestaltung kann das Sicherheitsschaltgerät von dem elektrischen Signal entkoppelt werden, wodurch das Sicherheitsschaltgerät vor Überspannungen seitens des elektrischen Signals geschützt wird. Bei der Koppelung kann es sich um eine induktive oder kapazitive Koppelung handeln. Dies trägt wirksam zu einer Erhöhung der Fehlersicherheit des Sicherheitsschaltgeräts bei.

In einer weiteren Ausgestaltung kann das weitere elektrische Element eine Betriebsanzeige, insbesondere an LED sein.

Sicherheitsschaltgeräte können über Anzeigen verfügen, die einen Betriebszustand des Geräts anzeigen. Diese Anzeigen können für einen ordnungsgemäßen Betrieb des Sicherheitsschaltgeräts normativ gefordert sein. Gemäß der weiteren Ausgestaltung kann die Energie für den Betrieb der Anzeige dem elektrischen Signal entnommen werden, so dass keine zusätzliche Spannungsversorgung für die Anzeige erforderlich ist. Insbesondere in den Fällen, in denen die Anzeige neben dem Sicherheitsschaltgerät das einzige elektrische Element ist, das aktiv mit Energie versorgt werden muss, ist diese Ausgestaltung besonders vorteilhaft, da auf eine separate Stromversorgung gänzlich verzichtet werden kann. Im Falle einer Betriebszustandsanzeige kann diese zudem vorteilhaft direkt an die entsprechenden Eingangssignale bzw. das zu schaltende Potenzial gekoppelt werden.

In einer weiteren Ausgestaltung kann das weitere elektrische Element eine erste Statusanzeige aufweisen, die einen Status eines der Schaltelemente anzeigt.

Bei dieser Ausgestaltung kann auch eine Zustandsanzeige der Kanäle auf einfache Weise mit einer Betriebsspannung versorgt werden, so dass auch hierfür keine separate Spannungsversorgung erforderlich ist. Somit kann auch diese Ausgestaltung zu einer Vereinfachung der notwendigen Geräteelektronik beitragen.

In einer weiteren Ausgestaltung kann das weitere elektrische Element ein elektronisches Element sein, das eine sicherheitsbezogene Aufgabe in dem Sicherheitsschaltgerät wahrnimmt, bspw. ein Mikrocontroller.

Bei dieser Ausgestaltung kann die von dem Signal aufgenommene Energie zur Versorgung eines Mikrocontrollers verwendet werden, der zur Steuerung und Überwachung des Sicherheitsschaltgeräts eingesetzt wird. Gemäß dieser Ausgestaltung kann auf eine separate Stromversorgung des Sicherheitsschaltgeräts auch dann verzichtet werden, wenn das Sicherheitsschaltgerät einen erweiterten Funktionsumfang hat, für den ein Mikrocontroller erforderlich ist.

In einer weiteren Ausgestaltung kann das weitere elektrische Element mit dem ersten, dem dritten, dem fünften und/oder dem sechsten Anschluss elektrisch verbunden sein.

Gemäß dieser Ausgestaltung ist das weitere elektrische Element mit einem oder mehreren Anschlüssen verbunden, an die ein elektrisches Signal anlegbar ist. Je nach Art des elektrischen Signals kann das elektrische Element direkt oder über ein Zusatzbauteil mit den Anschlüssen verbunden sein. Auf diese Weise kann eine Stromversorgung durch extern angelegte Signale einfach und effizient realisiert werden.

In einer weiteren Ausgestaltung kann das Sicherheitsschaltgerät ferner ein elektrisches Bauelement aufweisen, das mit dem weiteren elektrischen Element verschaltet ist und eine Spannungs- und/oder Stromversorgung für den Betrieb des weiteren elektrischen Elements einrichtet.

Gemäß dieser Ausgestaltung kann ein weiteres elektrisches Bauelement vorgesehen sein, das die von dem elektrischen Signal aufgenommene Energie für den Betrieb des weiteren elektrischen Elements umwandelt. Bei dem elektrischen Bauelement kann es sich um einen Widerstand handeln, der mit einer Spannung beaufschlagt als Stromquelle beispielsweise für eine LED wirkt. Denkbar ist auch die Verwendung eines Gleichrichters oder eines Spannungsreglers. Diese Ausgestaltung ermöglicht eine größere Bandbreite an möglichen elektrischen Signalen, die als Energiequelle genutzt werden können.

In einer weiteren Ausgestaltung kann das Sicherheitsschaltgerät ferner einen Energiespeicher aufweisen, der die Energie für den Betrieb des weiteren elektrischen Elements puffert, wobei das elektrische Signal den Energiespeicher lädt.

Gemäß dieser Ausgestaltung kann ein Energiespeicher vorgesehen sein, der dem weiteren elektrischen Element vorgeschaltet ist, um die für das elektrische Element erforderliche Energie bereitzustellen. Der Energiespeicher kann ein induktives oder kapazitives Bauelement sein, das die für den Betrieb des anderen elektrischen Bauelements erforderliche Spannung oder den für den Betrieb des anderen elektrischen Bauelements erforderlichen Strom puffert oder glättet. Dadurch können unterschiedliche elektrische Signale als Energiequelle genutzt werden. Diese Ausgestaltung trägt somit zur effektiven Anpassung der Vorrichtung an eine größere Anzahl von elektrischen Signalen bei.

In einer weiteren Ausgestaltung kann an dem Gehäuse ein siebter Anschluss vorgesehen sein, an dem ein Referenzpotenzial für die Elektronik anschließbar ist.

Bei dieser Ausgestaltung kann daher mindestens ein weiterer Anschluss vorgesehen sein, um ein einheitliches Referenzpotenzial zur Verfügung zu stellen. Das Referenzpotenzial kann dazu verwendet werden, aus dem elektrischen Signal auf einfache Weise eine Versorgungsspannung zu erzeugen, wenn dieses einem Potenzial entspricht. Es versteht sich von selbst, dass auch ein an den zweiten oder vierten Anschluss angeschlossenes Potenzial als Referenzpotenzial verwendet werden kann, ohne dass ein siebter Anschluss vorhanden sein muss.

In einer weiteren Ausgestaltung kann das weitere elektrische Elemente ausschließlich aus der dem elektrischen Signal entnommenen Energie bestromt werden.

Bei dieser Ausgestaltung ist somit keine weitere Energiequelle für den Betrieb des weiteren elektrischen Elements erforderlich. Die Ausgestaltung trägt somit besonders vorteilhaft zur Reduzierung externer Anschlüsse sowie zur Vereinfachung der Elektronik bei.

In einer weiteren Ausgestaltung kann das Gehäuse zwei Seitenflächen sowie mehrere die Seitenflächen verbindende Funktionsflächen aufweisen, die zusammen einen umschlossenen Innenraum definieren, in dem die Elektronik angeordnet ist, wobei ein Abstand der Seitenflächen eine maximale Breite des Gehäuses definiert und die Anschlüsse an den Funktionsflächen angeordnet sind, und wobei insbesondere die maximale Breite gleich oder weniger als 22,5 mm beträgt.

Sicherheitsschaltgeräte können ein Gehäuse haben, das für den Einbau in einen Schaltschrank geeignet ist. Ein solches Gehäuse weist in der Regel eine Breite auf, die um ein Vielfaches kleiner ist als die Tiefe und Höhe des Gehäuses. Das Gehäuse kann z. B. kastenförmig mit zwei Seitenflächen und vier die Seitenflächen verbindenden Funktionsflächen ausgebildet sein. Eine der Funktionsflächen (Frontfläche) ist bei bestimmungsgemäßem Einbau in einen Schaltschrank dem Benutzer zugewandt und trägt die externen Anschlüsse. Die beiden Seitenflächen definieren die Breite des Gehäuses. Die Reduzierung von externen Anschlüssen erlaubt es, die Gehäusebreite vorteilhaft zu reduzieren.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
Fig. 1 ein Sicherheitsschaltgerät gemäß einem ersten Ausführungsbeispiel der vorliegenden Offenbarung in einer schematischen Darstellung,
Fig. 2 ein Sicherheitsschaltgerät gemäß einem zweiten Ausführungsbeispiel der vorliegenden Offenbarung in einer schematischen Darstellung,
Fig. 3 einen möglichen Anwendungsfall für ein Sicherheitsschaltgerät 10 gemäß der vorliegenden Offenbarung in einer vereinfachten schematischen Darstellung,
Fig. 4 ein Ausführungsbeispiel für ein Gehäuse eines Sicherheitsschaltgeräts gemäß der vorliegenden Offenbarung in einer vereinfachten perspektivischen Darstellung, und
Fig. 5 ein Referenzbeispiel für ein Sicherheitsschaltgerät gemäß dem Stand der Technik.

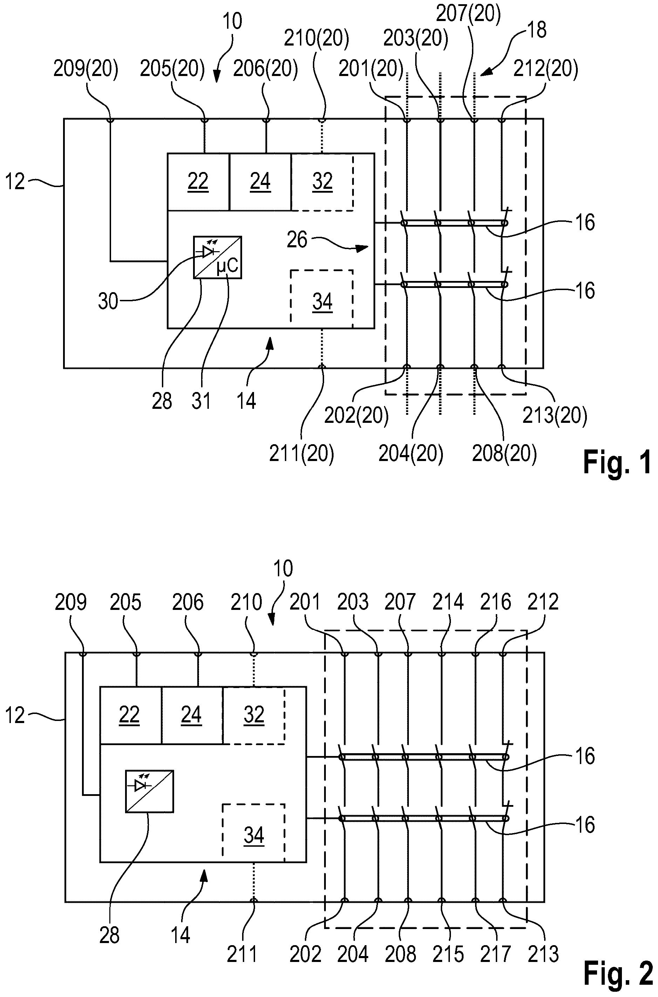

Fig. 1 zeigt ein Sicherheitsschaltgerät gemäß einem ersten Ausführungsbeispiel der vorliegenden Offenbarung in einer schematischen Darstellung. Das Sicherheitsschaltgerät ist hier in seiner Gesamtheit mit der Bezugsziffer 10 bezeichnet.

Das Sicherheitsschaltgerät 10 weist ein Gehäuse 12 sowie eine in dem Gehäuse 12 angeordnete Elektronik 14 auf. Die Elektronik 14 weist zwei Schaltelemente 16, insbesondere zwangsgeführte Relais, auf, deren Kontakte in einem Sicherheitsstromkreis 18 anordenbar sind. Die Kontakte der beiden Schaltelemente 16 sind über Anschlüsse 20 an dem Gehäuse 12 nach außen geführt. Das Sicherheitsschaltgerät 10 weist wenigstens einen ersten Anschluss 201, einen zweiten Anschluss 202, einen dritten Anschluss 203 und einen vierten Anschluss 204 auf, um den Sicherheitsstromkreis redundant über die Kontakte der Schaltelemente 16 zu führen.

Ferner weist das Sicherheitsschaltgerät 10 einen ersten Eingangskreis 22 und einen zweiten Eingangskreis 24 auf, die ebenfalls über Anschlüsse 20 an dem Gehäuse 12 von außen kontaktierbar sind. Der erste Eingangskreis 22 ist über einen fünften Anschluss 205 und der zweite Eingangskreis 24 über einen sechsten Anschluss 206 extern anschließbar, wobei die Eingangskreise 22, 24 vorzugsweise ausschließlich über den fünften und den sechsten Anschluss 205, 206 extern verbindbar sind. Über den fünften Anschluss 205 kann ein erstes Eingangssignal von einem Sicherheitsgeber (hier nicht dargestellt) und über den sechsten Anschluss 206 ein zweites Eingangssignal von einem Sicherheitsgeber (hier nicht dargestellt) aufgenommen werden. Das erste und das zweite Eingangssignal liegen dann an dem fünften und dem sechsten Anschluss 205, 206 des Sicherheitsschaltgeräts 10 an, wenn der Sicherheitsgeber einen sicheren Zustand einer zu überwachenden technischen Anlage signalisiert.

Wenn das erste und das zweite Eingangssignal ordnungsgemäß an dem fünften und dem sechsten Anschluss 205, 206 anliegen, stellen die Eingangskreise 22, 24 ein Ansteuerungssignal 26 für die beiden Schaltelemente 16 bereit, auf dessen Grundlage die Schaltelemente 16 den Sicherheitsstromkreis 18 schließen. Fällt eines der Eingangssignale ab oder erkennt das Sicherheitsschaltgerät 10 auf andere Weise einen Fehler des Eingangssignals oder anderer Einrichtungen des Sicherheitsschaltgeräts 10, wird kein Ansteuerungssignal 26 bereitgestellt, so dass die Schaltelemente 16 den Sicherheitsstromkreis 18 unterbrechen und damit die Herbeiführung eines sicheren Zustands an der zu überwachenden technischen Anlage erzwingen.

Das Sicherheitsschaltgerät 10 weist ferner ein weiteres elektrisches Element 28 auf. Das weitere elektrische Element 28 kann Teil der Elektronik 14 sein und beispielsweise zusammen mit den Schaltelementen 16, den Eingangskreisen 22, 24 auf einer gemeinsamen Platine angeordnet sein. Das weitere elektrische Element 28 ist ein elektrisches oder elektronisches Bauelement, das ergänzend zu den Schaltelementen 16 eine Funktion des Sicherheitsschaltgeräts 10 wahrnimmt. In verschiedenen Ausführungsbeispielen kann das weitere elektrische Element 28 eine Anzeige sein, die beispielsweise durch eine oder mehrere Leuchtdioden 30 realisiert wird. Alternativ oder ergänzend kann das weitere elektrische Element 28 auch ein Steuerelement sein, wie beispielsweise ein Mikrocontroller 31 oder ein FPGA, und Steuerungsfunktionen des Sicherheitsschaltgeräts übernehmen. Ein solches Steuerelement könnte beispielsweise ergänzende sicherheitsbezogene Aufgaben des Sicherheitsschaltgeräts 10 wahrnehmen, wie beispielsweise einen kontinuierlichen Vergleich der Eingangssignale, eine Querschlusserkennung oder Diagnosefunktionen. Selbstverständlich ist das zusätzliche elektrische Element 28 nicht auf diese genannten Funktionen beschränkt.

Das weitere elektrische Element 28 ist ferner dazu eingerichtet, einem an dem ersten, dritten, fünften und/oder sechsten Anschluss 201, 203, 205, 206 anliegenden elektrischen Signal Energie für seinen eigenen Betrieb zu entnehmen. Das elektrische Signal kann dabei entsprechend der oben beschriebenen Zuordnung einem oder beiden Eingangssignalen oder einem über den Sicherheitsstromkreis 18 geführten Signal entsprechen. Das elektrische Signal kann beispielsweise ein an den genannten Anschlüssen anliegendes statisches Potenzial sein, dem unmittelbar Energie entnommen werden kann. Alternativ können an den Anschlüssen auch dynamische Signale (Taktsignale) anliegen, denen Energie aus statischen Anteilen oder als Effektivwerte entnommen werden kann.

Das weitere elektrische Element 28 kann eine sicherheitsbezogene Einrichtung sein, die zur Erfüllung der normativen Anforderungen, die an das Sicherheitsschaltgerät gestellt werden können, beiträgt. Beispielsweise ist es denkbar, dass ein Sicherheitsschaltgerät nur dann die normativen Anforderungen erfüllt, wenn das Sicherheitsschaltgerät seinen Zustand bzw. den Zustand der Schaltelemente (Kanäle) durch eine Anzeige für einen Benutzer visualisieren kann. Denkbar ist auch, dass das Sicherheitsschaltgerät neben dem sicheren Schalten des Sicherheitsstromkreises weitere Funktionen übernehmen muss, die eine elektrische (integrierte) Schaltung zur Verfügung stellt, um ein bestimmtes Sicherheitsniveau erfüllen zu können.

Unabhängig von der Art des weiteren elektrischen Elements 28 wird die hierfür erforderliche Energie dem an den genannten Anschlüssen anliegenden elektrischen Signal entnommen. Das Sicherheitsschaltgerät weist vorzugsweise keine zusätzliche Energieversorgung, wie beispielsweise eine Spannungs- oder Stromquelle, zum Betreiben des weiteren elektrischen Elements 28 auf. Durch den Verzicht auf eine zusätzliche Energieversorgung für das weitere elektrische Element 28 können dafür vorgesehene externe Anschlüsse am Gehäuse 12 vorteilhaft entfallen oder anderweitig verwendet werden.

Weitere Anschlüsse können bei dem vorliegenden Sicherheitsschaltgerät gegenüber bekannten Sicherheitsschaltgeräten zudem eingespart werden, indem bei den an den Eingangskreisen 22, 24 angeschlossenen Sicherheitsgebern davon ausgegangen wird, dass es sich um aktive Sicherheitsgeber handelt. Aktive Sicherheitsgeber zeichnen sich dadurch aus, dass sie unabhängig von dem Sicherheitsschaltgerät 10 ein Eingangssignal bereitstellen können. Das heißt, es handelt sich um Geräte, die eine eigene Stromversorgung haben und über ein sogenanntes Ausgangssignalschaltgerät (OSSD) verfügen, das in Abhängigkeit von einem Sensor des Sicherheitsgebers ein sicheres Eingangssignal zur Verfügung stellen kann. Solche aktiven Sicherheitsgeber sind im Gegensatz zu passiven Sicherheitsgebern, wie z. B. Not-Aus-Tastern, nicht darauf angewiesen, dass das Sicherheitsschaltgerät ein Schaltpotenzial für die Sicherheitsgeber bereitstellt. Dementsprechend kann durch die Spezialisierung auf aktive Sensoren auf weitere Anschlüsse am Gehäuse zur Bereitstellung von Schaltpotenzialen verzichtet werden. Jeder Eingangskreis benötigt somit nur einen Anschluss am Gehäuse, um das Eingangssignal eines aktiven Sicherheitsgebers aufzunehmen.

Die Einschränkung auf aktive Sicherheitsgeber hat zudem den Vorteil, dass funktionsbedingt ein elektrisches Signal als Eingangssignal an dem Sicherheitsschaltgerät anliegt, dem Energie entnommen werden kann, die nicht vom Sicherheitsschaltgerät bereitgestellt wird. Bei einem Ausgangssignalschaltgerät (OSSD) wird das bereitgestellte Eingangssignal als OSSD-Signal bezeichnet, dessen elektrische Eigenschaften in der Regel für verschiedene Anwendungsfälle normativ festgelegt sind. Eine Energieversorgung des weiteren elektrischen Elements auf der Basis eines OSSD-Signals ist somit auf einfache Weise möglich, da die Energieversorgung an die elektrischen Eigenschaften angepasst werden kann. Das weitere Element 28 kann z. B. so gewählt werden, dass es direkt mit dem OSSD-Signal gekoppelt werden kann, um bei Anliegen des OSSD-Signals bestromt zu werden. Es ist jedoch auch denkbar, dass ein weiteres Bauelement vorgesehen ist, das zwischen dem Anschluss des elektrischen Signals und dem weiteren elektrischen Element 28 oder parallel zu dem weiteren elektrischen Element 28 geschaltet ist, um eine geeignete Spannungsversorgung für das weitere elektrische Element 28 einzustellen. Das weitere Bauelement kann ein einfacher Widerstand oder ein Gleichrichtelement wie beispielsweise eine Diode sein. Weiterhin kann ein Spannungsregler zwischen den Anschluss des elektrischen Signals und das weitere elektrische Bauelement 28 geschaltet sein, um eine definierte und konstante Spannung an dem weiteren elektrischen Element 28 einzustellen. Die vorliegende Offenbarung ist jedoch nicht auf eine bestimmte Form der Energieentnahme beschränkt.

Neben den genannten ersten bis sechsten Anschlüssen 201 bis 206 kann das Sicherheitsschaltgerät optional über weitere Anschlüsse verfügen, wie das hier dargestellte Ausführungsbeispiel zeigt. Beispielsweise kann das Sicherheitsschaltgerät einen siebten Anschluss 207 und einen achten Anschluss 208 aufweisen. Der siebte und der achte Anschluss 207, 208 bilden einen weiteren sicheren Ausgang, analog zu den beiden sicheren Ausgängen, die durch den ersten und zweiten Anschluss 201, 202 und den dritten und vierten Anschluss 203, 204 gebildet werden. Ein sicherer Ausgang wird somit durch jeweils zwei Anschlüsse 20 gebildet, die über die Schaltkontakte der Schaltelemente 16 verbunden sind. In der hier bevorzugten Ausführungsform weist das Sicherheitsschaltgerät 10 somit drei sichere Ausgänge auf.

An dem Sicherheitsschaltgerät 10 kann ferner ein neunter Anschluss 209 vorgesehen sein, der mit der Elektronik 14 des Sicherheitsschaltgeräts 10 gekoppelt ist. An den neunten Anschluss 209 kann beispielsweise ein Referenzpotenzial angelegt werden, mit dem gemeinsam eine Versorgungsspannung für das weitere elektrische Element 28 gebildet wird. Das Referenzpotenzial kann beispielsweise ein gemeinsames Massepotenzial für die Elektronik 14 sein. Grundsätzlich könnte ein solches Potenzial auch an den zweiten oder vierten Anschluss angelegt werden, so dass kein zusätzlicher Anschluss erforderlich wäre, wobei dann jedoch Maßnahmen zur galvanischen Entkopplung des Referenzpotenzials von der weiteren Elektronik 14 zu treffen wären.

Darüber hinaus kann das Sicherheitsschaltgerät 10 weitere Einrichtungen, Schaltkreise und Anschlüsse aufweisen, wie im vorliegenden Ausführungsbeispiel durch die gestrichelten Linien angedeutet ist. Ein weiterer Schaltkreis kann beispielsweise ein Startschaltkreis 32 sein, über den ein Einschaltvorgang gesteuert werden kann. Der Startschaltkreis 32 kann über einen zehnten Anschluss 210 ein Startsignal empfangen und derart ausgebildet sein, dass nur bei Vorliegen des Startsignals die Schaltelemente 26 den Sicherheitsstromkreis 18 schließen. Denkbar ist auch eine Diagnoseeinrichtung 34, die an einem elften Anschluss 211 ein Signal bereitstellt, das den aktuellen Schaltzustand der Schaltelemente signalisiert.

Schließlich kann das Sicherheitsschaltgerät 10 noch einen zwölften und einen dreizehnten Anschluss 212, 213 aufweisen, die wie die sicheren Ausgänge (Anschlüsse 201-204; 207-208) über die Kontakte des Schaltelements 16 verbunden sind, jedoch nicht über zwangsgeführte Schließerkontakte, sondern über zwangsgeführte Öffnerkontakte. Schließerkontakte sind Kontakte, die bei betätigtem Schaltelement, d. h. im eingeschalteten Zustand, eine Verbindung zwischen den Kontakten schließen, und Öffnerkontakte sind Kontakte, die bei betätigtem Schaltelement eine Verbindung zwischen den Kontakten öffnen. Der zwölfte und dreizehnte Anschluss 212, 213 können als Rückführkreis verwendet und z. B. mit dem Startschaltkreis 32 verbunden werden, um einen fehlerhaften Wiederanlauf zu verhindern.

Gemäß dem ersten Ausführungsbeispiel kann das Sicherheitsschaltgerät 10, wie hier dargestellt, dreizehn Anschlüsse aufweisen. Für die primäre Funktion des Sicherheitsschaltgeräts 10, nämlich eine sichere Unterbrechung eines Sicherheitsstromkreises in Abhängigkeit von redundanten Eingangssignalen, sind jedoch, wie oben gezeigt, sechs Anschlüsse ausreichend. Bei dem Sicherheitsschaltgerät 10 gemäß dem ersten Ausführungsbeispiel kann daher das Gehäuse 12 gegenüber einem Sicherheitsschaltgerät, das üblicherweise zehn oder mehr externe Anschlüsse zur Bereitstellung der Primärfunktion aufweist, verkleinert werden. Alternativ oder ergänzend können freiwerdende Anschlüsse für andere Aufgaben genutzt werden. Ein Beispiel hierfür ist in Fig. 2 dargestellt.

Fig. 2 zeigt ein Sicherheitsschaltgerät gemäß einem zweiten Ausführungsbeispiel der vorliegenden Offenbarung in einer schematischen Darstellung. Das Sicherheitsschaltgerät ist auch hier in seiner Gesamtheit mit der Bezugsziffer 10 bezeichnet.

In Fig. 2 sind funktionsgleiche Elemente mit den gleichen Bezugsziffern wie in Fig. 1 versehen und auf eine detaillierte Beschreibung dieser Elemente wird im Folgenden verzichtet.

Das Sicherheitsschaltgerät 10 gemäß dem zweiten Ausführungsbeispiel weist ein Gehäuse 12, eine Elektronik 14, zwei Schaltelemente 16, eine Vielzahl von Anschlüssen 20 sowie einen ersten und einen zweiten Eingangskreis 22, 24 auf. Die Vielzahl von Anschlüssen 20 beinhaltet den ersten bis sechsten Anschluss 201 bis 206. Ferner weist das Sicherheitsschaltgerät 10 das weitere elektrische Element 28 auf, welches, wie zuvor im Zusammenhang mit dem ersten Ausführungsbeispiel beschrieben, aus einem an dem ersten, dritten, fünften oder sechsten Anschluss anliegenden elektrischen Signal eine Energie für seinen eigenen Betrieb entnimmt.

Wie im ersten Ausführungsbeispiel können auch im zweiten Ausführungsbeispiel optional der siebte bis dreizehnte Anschluss 207 bis 213 in gleicher Weise vorgesehen sein.

Das zweite Ausführungsbeispiel unterscheidet sich von dem ersten Ausführungsbeispiel in der Ausgestaltung der Schaltelemente 16. Die Schaltelemente 16 verfügen hier über weitere zwangsgeführte Schließerkontakte, die über einen vierzehnten, fünfzehnten, sechzehnten und siebzehnten Anschluss 214, 215, 216, 217 an dem Gehäuse 12 nach außen geführt sind. Der vierzehnte und fünfzehnte Anschluss 214, 215 bilden hier also einen vierten sicheren Ausgang und der sechzehnte und siebzehnte Anschluss 216, 217 einen fünften sicheren Ausgang des Sicherheitsschaltgeräts 10.

Bei dem Sicherheitsschaltgerät 10 gemäß dem zweiten Ausführungsbeispiel können somit vorteilhafterweise fünf sichere Ausgänge vorgesehen sein, ohne die Anzahl der externen Anschlüsse 20 gegenüber einem Sicherheitsschaltgerät aus dem Stand der Technik wesentlich zu erhöhen. Dies ist möglich, indem durch die beschriebene Energieentnahme externe Anschlüsse in den Eingangskreisen oder in einer Stromversorgung des Sicherheitsschaltgeräts entfallen oder frei werden.

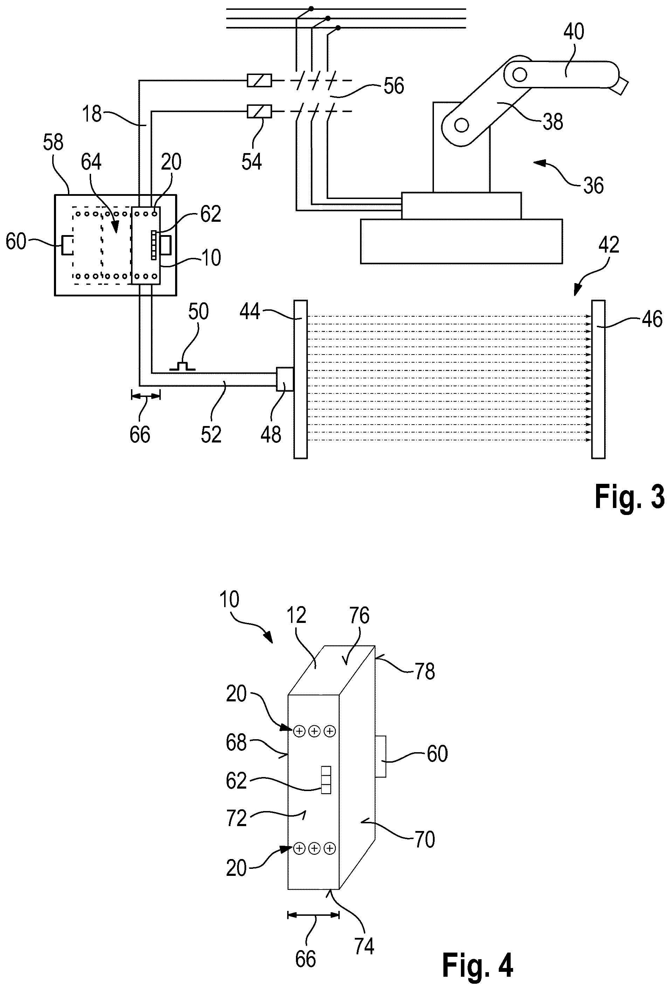

Fig. 3 zeigt in einer vereinfachten schematischen Darstellung einen möglichen Anwendungsfall für ein Sicherheitsschaltgerät 10 gemäß der vorliegenden Offenbarung.

Fig. 3 zeigt als zu überwachende technische Anlage 36 einen automatisiert arbeitenden Roboter 38. Der Roboter 38 hat einen definierten Arbeitsbereich, in dem sich der Roboterarm 40 bewegen kann. Der Zugang zum Arbeitsbereich ist durch einen Sicherheitsgeber abgesichert. Der Sicherheitsgeber ist hier eine berührungslos wirkende Schutzeinrichtung (BWS) in Form eines Lichtgitters 42. Das Lichtgitter 42 weist eine erste Komponente 44 und eine zweite Komponente 46 auf, zwischen denen Lichtstrahlen ausgetauscht werden können. Das Lichtgitter 42 signalisiert nur dann einen sicheren Zustand, wenn der Austausch der Lichtstrahlen in definierter Weise erfolgt und auch sonst kein Fehler im Lichtgitter 42 aufgetreten ist. Die Signalisierung erfolgt über ein Ausgangssignalschaltgerät (OSSD) 48, das ein redundantes Ausgangssignal (OSSD-Signal 50) bereitstellt, wenn das Lichtgitter fehlerfrei arbeitet und kein Zugang zur technischen Anlage 36 registriert wurde.

Ein Sicherheitsschaltgerät 10 gemäß einem Ausführungsbeispiel der vorliegenden Offenbarung ist über Leiter 52 mit dem Ausgangssignalschaltgerät 48 des Lichtgitters 42 verbunden. Das Sicherheitsschaltgerät 10 empfängt folglich ein OSSD-Signal 50 redundant als erstes und zweites Eingangssignal und schaltet in Abhängigkeit davon die Schaltelemente 16. Die Schaltelemente 16 sind in der zuvor beschriebenen Weise in einen Sicherheitsstromkreis 18 eingebunden, so dass redundante Schütze 54 bestromt werden, wenn das OSSD-Signal 50 vom Lichtgitter 42 bereitgestellt wird. Die Arbeitskontakte 56 der Schütze 54 können wiederum in einer Stromversorgung der technischen Anlage 36 angeordnet sein, so dass eine Stromversorgung der technischen Anlage 36 nur dann und solange erfolgt, wie das Ausgangssignalschaltgerät 48 das OSSD-Signal 50 bereitstellt. Auf diese Weise stellt das Sicherheitsschaltgerät 10 im Zusammenwirken mit dem Lichtgitter 42 eine Sicherheitsfunktion bereit, die einen Zugang zu der technischen Anlage 36 überwacht.

Das Sicherheitsschaltgerät 10 kann zusammen mit weiteren Steuereinrichtungen in einem Schaltschrank 58 angeordnet sein. Insbesondere können in dem Schaltschrank 58 weitere Sicherheitsschaltgeräte angeordnet sein, über die zusätzliche Sicherheitsfunktionen realisiert werden. Die weiteren Sicherheitsschaltgeräte sind hier durch gestrichelte Linien dargestellt. Die einzelnen Sicherheitsschaltgeräte können nebeneinander auf einer Hutschiene 60 angeordnet sein. Die Anschlüsse 20 für die Verdrahtung sowie weitere Anzeigeelemente 62 sind jeweils an Frontflächen 64 der Sicherheitsschaltgeräte angeordnet, die nach dem Einbau in den Schaltschrank 58 einem Benutzer zugewandt sind. Eine Breite der Frontflächen 64 definiert im Wesentlichen die erforderliche Baubreite 66 eines Sicherheitsschaltgeräts und ist im Wesentlichen abhängig von der Anzahl der erforderlichen Anschlüsse 20 an der jeweiligen Frontfläche 64. Ein Standardmaß für die Baubreite 66 von Sicherheitsschaltgeräten ist beispielsweise 22,5 mm.

Durch das Einsparen der externen Anschlüsse 20 an den Sicherheitsschaltgeräten gemäß der vorliegenden Offenbarung kann somit der tatsächlich benötigte Bauraum für die Sicherheitsschaltgeräte im Schaltschrank 58 reduziert werden. Gleichzeitig vereinfacht sich die Verdrahtung, wenn keine externe Stromversorgung für die Sicherheitsschaltgeräte erforderlich ist. Grundsätzlich können durch die reduzierte Anzahl der Anschlüsse 20 Verdrahtungsfehler wirksam reduziert werden.

Fig. 4 zeigt in einer vereinfachten perspektivischen Darstellung ein Ausführungsbeispiel für ein Gehäuse eines Sicherheitsschaltgeräts gemäß der vorliegenden Offenbarung.

Gemäß Fig. 4 ist das Sicherheitsschaltgerät 10 in einem im Wesentlichen rechteckigen Gehäuse 12 angeordnet. Das kastenförmige Gehäuse 12 weist zwei gegenüberliegende Seitenflächen 68, 70 auf sowie in diesem Beispiel vier die Seitenflächen 68, 70 verbindende Funktionsflächen 72, 74, 76, 78. Die Funktionsfläche 72 entspricht bei bestimmungsgemäßer Montage des Sicherheitsschaltgeräts 10 in einem Schaltschrank einer Frontfläche 64 des Sicherheitsschaltgeräts 10. Zur Montage kann das Gehäuse 12 an einer der Frontfläche 64 gegenüberliegenden Funktionsfläche 78 beispielsweise eine Halterung zur Befestigung auf einer Hutschiene 60 aufweisen.

An der als Frontfläche dienenden Funktionsfläche 72, die nach dem Einbau in einen Schaltschrank einem Benutzer zugewandt ist, sind die wesentlichen Bedien- und Anzeigeelemente sowie die externen Anschlüsse 20 des Sicherheitsschaltgeräts angeordnet. Im vorliegenden Ausführungsbeispiel sind an der Frontfläche 72 des Sicherheitsschaltgeräts 10 sechs externe Anschlüsse 20 sowie ein Anzeigeelement 62 vorgesehen. Die sechs externen Anschlüsse 20 können den zuvor beschriebenen ersten bis sechsten Anschlüssen 201 bis 206 entsprechen und beispielsweise durch in der Automatisierungstechnik übliche Schraub- oder Federkraftklemmen realisiert sein. Das Anzeigeelement 62 kann beispielsweise drei Anzeigen aufweisen, die den Betriebszustand des Sicherheitsschaltgeräts insgesamt sowie die Zustände der beiden Schaltelemente anzeigen. Bei den Anzeigen des Anzeigeelements 62 kann es sich um weitere elektrische Elemente 28 im Sinne dieser Offenbarung handeln, deren Energieversorgung über ein an den Anschlüssen 201 bis 206 anliegendes elektrisches Signal in der zuvor beschriebenen Weise erfolgt.

Durch die Reduzierung der Anzahl der externen Anschlüsse 20 in der zuvor beschriebenen Weise kann eine Baubreite 66, die einem maximalen Abstand der Seitenflächen 68, 70 entspricht, vorteilhaft reduziert werden, wenn die Anschlüsse 20 in der in der Automatisierungstechnik üblichen Weise an der Frontfläche 72 des Gehäuses 12 angeordnet sind. Auf diese Weise kann ein Sicherheitsschaltgerät 10 bereitgestellt werden, das für spezielle Sicherheitsfunktionen, beispielsweise im Zusammenwirken mit BWS, wie in Fig. 3 dargestellt, geeignet ist und hierfür eine geringere Baubreite 66 als vergleichbare Standardgeräte aufweist. Zudem können ein Verdrahtungsaufwand sowie Verdrahtungsfehler durch ein solches Sicherheitsschaltgerät vorteilhaft reduziert werden.

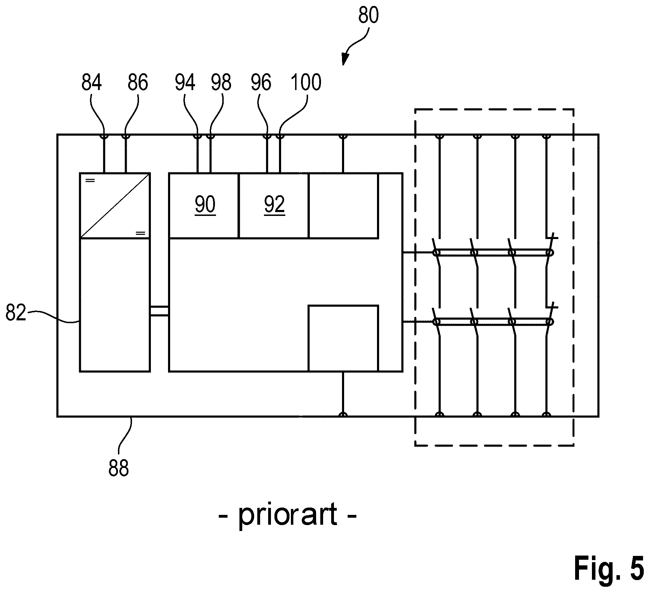

Fig. 5 zeigt abschließend ein Referenzbeispiel eines Sicherheitsschaltgeräts 80 gemäß dem Stand der Technik. Das Sicherheitsschaltgerät 80 unterscheidet sich von dem Sicherheitsschaltgerät 10 gemäß dem ersten Ausführungsbeispiel der vorliegenden Offenbarung durch eine Stromversorgung 82 für die interne Elektronik, die über zwei Anschlüsse 84, 86 an dem Gehäuse 88 mit einer externen Stromversorgung koppelbar ist.

Darüber hinaus unterscheidet sich das Referenzbeispiel dadurch, dass entsprechende Einrichtungen für die zuvor beschriebene Energieentnahme aus einem an den übrigen Anschlüssen anliegenden elektrischen Signal sowie die Verwendung der entnommenen Energie zur Versorgung eines elektrischen Elements des Sicherheitsschaltgeräts, das nicht den Schaltelementen entspricht, fehlen. Vielmehr werden elektrische Elemente im Sinne dieser Offenbarung bei dem Sicherheitsschaltgerät 80 gemäß dem Stand der Technik durch die zusätzliche Stromversorgung 82 versorgt.

Das Sicherheitsschaltgerät 80 gemäß dem Stand der Technik weist ferner zwei Eingangskreise 90, 92 auf, die jeweils zwei externe Anschlüsse an dem Gehäuse 88 aufweisen. Die gegenüber den Eingangskreisen 22, 24 zusätzlichen Anschlüsse 94, 96 dienen der Bereitstellung von Ausgangssignalen, die über passive Sicherheitsgeber geschaltet und an die Eingänge 98, 100 zurückgeführt werden können. Das Sicherheitsschaltgerät 80 ist somit nicht für den speziellen Einsatz mit aktiven Sicherheitsgebern, sondern für den allgemeinen Einsatz mit passiven oder aktiven Sicherheitsgebern konzipiert.

Die Sicherheitsschaltgeräte 10 gemäß dem ersten und zweiten Ausführungsbeispiel zeichnen sich durch eine verringerte Anzahl von externen Anschlüssen bzw. durch eine andere Belegung der verfügbaren Anschlüsse aus. Es versteht sich jedoch von selbst, dass die Ausführungsbeispiele den Gegenstand der Erfindung nur exemplarisch wiedergeben und die Erfindung allein durch die nachfolgenden Patentansprüche definiert ist.

## Patentansprüche

1. Sicherheitsschaltgerät (10) zum sicherheitsbezogenen Unterbrechen eines Sicherheitsstromkreises (18), aufweisend:
ein Gehäuse (12) und eine in dem Gehäuse angeordnete Elektronik (14),
wobei die Elektronik (14) zwei Schaltelemente (16) aufweist, die über einen ersten, zweiten, dritten und vierten an dem Gehäuse (12) befindlichen Anschluss (20; 201-204) in dem Sicherheitsstromkreis (18) anordenbar sind und diesen redundant schließen, wenn an jedem Schaltelement (16) ein Ansteuerungssignal anliegt, wobei an dem Gehäuse (12) ein fünfter Anschluss (20; 205) und ein sechster Anschluss (20; 206) vorgesehen sind, an die ein erstes Eingangssignal und ein zweites Eingangssignal anlegbar sind, die den Ansteuerungssignalen der Schaltelemente (16) entsprechen, so dass bei Anliegen des ersten und des zweiten Eingangssignals an dem fünften und sechsten Anschluss (205, 206) der Sicherheitsstromkreis (18) geschlossen ist, und
**dadurch gekennzeichnet , dass** die in dem Gehäuse (12) angeordnete Elektronik (14) ein weiteres elektrisches Element (28) aufweist, das dazu eingerichtet ist, eine Energie für den eigenen Betrieb einem an dem ersten, dem dritten, dem fünften und/oder dem sechsten Anschluss (201, 203, 205, 206) anliegenden elektrischen Signal zu entnehmen.

2. Sicherheitsschaltgerät nach Anspruch 1, wobei das elektrische Signal das erste und/oder das zweite Eingangssignal ist.

3. Sicherheitsschaltgerät nach Anspruch 1 oder 2, wobei das elektrische Signal ein von den Schaltelementen (16) zuschaltendes Potenzial ist.

4. Sicherheitsschaltgerät nach einem der Ansprüche 1 bis 3, wobei das elektrische Signal von dem weiteren elektrischen Element (28) galvanisch getrennt ist.

5. Sicherheitsschaltgerät nach einem der Ansprüche 1 bis 4, wobei das weitere elektrische Element (28) eine Anzeige, insbesondere eine LED, ist, die einen Betriebsstatus des Sicherheitsschaltgeräts und/oder einen Status eines der Schaltelemente (16) anzeigt.

6. Sicherheitsschaltgerät nach einem der Ansprüche 1 bis 5, wobei das weitere elektrische Element (28) ein elektronisches Element ist, insbesondere ein Mikrocontroller (31), und eine sicherheitsbezogene Aufgabe des Sicherheitsschaltgeräts (10) wahrnimmt.

7. Sicherheitsschaltgerät nach einem der Ansprüche 1 bis 6, wobei das weitere elektrische Element (28) mit dem ersten, dem dritten, dem fünften und/oder dem sechsten Anschluss (201, 203, 205, 206) elektrisch verbunden ist.

8. Sicherheitsschaltgerät nach einem der Ansprüche 1 bis 7, ferner aufweisend: ein elektrisches Bauelement, das mit dem weiteren elektrischen Element (28) verschaltet ist und eine Spannungs- und/oder Stromversorgung für den Betrieb des weiteren elektrischen Elements (28) einrichtet.

9. Sicherheitsschaltgerät nach einem der Ansprüche 1 bis 8, ferner aufweisend: einen Energiespeicher, der die Energie für den Betrieb des elektrischen Elements puffert, wobei das elektrische Signal den Energiespeicher lädt.

10. Sicherheitsschaltgerät nach einem der Ansprüche 1 bis 9, wobei an dem Gehäuse (12) ein siebter Anschluss (207) vorgesehen ist, an dem ein Referenzpotenzial für die Elektronik (14) anschließbar ist.

11. Sicherheitsschaltgerät nach einem der Ansprüche 1 bis 10, wobei das weitere elektrische Elemente (28) ausschließlich aus der dem elektrischen Signal entnommenen Energie bestromt wird.

12. Sicherheitsschaltgerät nach einem der Ansprüche 1 bis 11, wobei das Gehäuse (12) zwei Seitenflächen (68, 70) sowie mehrere die Seitenflächen verbindende Funktionsflächen (72, 74, 76, 78) aufweist, die zusammen einen umschlossenen Innenraum definieren, in dem die Elektronik (14) angeordnet ist, wobei ein Abstand der Seitenflächen eine maximale Breite (66) des Gehäuses (12) von insbesondere gleich oder weniger 22,5 mm definiert und die Anschlüsse (20) an einer der Funktionsflächen (72, 74, 76, 78) angeordnet sind.

13. Sicherheitsschaltgerät nach einem der Ansprüche 1 bis 12, wobei der erste, zweite, dritte und vierte an dem Gehäuse befindliche Anschluss (201-204) zwei sichere Ausgänge repräsentieren, die jeweils den Sicherheitsstromkreis (18) unterbrechen können, wobei an dem Gehäuse (12) sechs weitere Anschlüsse (207, 208; 214-217) vorgesehen sind, die zusammen drei weitere sichere Ausgänge bilden.

14. Sicherheitsschaltgerät nach einem der Ansprüche 1 bis 13, wobei das erste
Eingangssignal ein codiertes Signal, insbesondere ein Signal von einem Ausgangssignalschaltgerät, auch OSSD- Signal (50) genannt, ist und
von einem Ausgangssignalschaltgerät (48) einer Schutzeinrichtung, insbesondere einer berührungslos wirkenden Schutzeinrichtung, bereitgestellt wird.

15. Sicherheitsschaltgerät nach einem der Ansprüche 1 bis 14, wobei die Anschlüsse (20) des Sicherheitsschaltgeräts Schraub- oder Federkraftklemmen sind.

## Claims

1. A safety switching device (10) for safety-related interruption of a safety circuit (18), comprising:
a housing (12) and circuitry (14) arranged in the housing,
wherein the circuitry (14) comprises two switching elements (16) which can be arranged in the safety circuit (18) via a first, second, third and fourth terminal (20; 201-204) located on the housing (12) and close the safety circuit (18) redundantly when an actuation signal is present at each switching element (16),
wherein a fifth terminal (20; 205) and a sixth terminal (20; 206) are provided on the housing (12), to which a first input signal and a second input signal can be applied, which correspond to the actuation signals of the switching elements (16), so that the safety circuit (18) is closed when the first and second input signals are applied to the fifth and sixth terminals (205, 206), and
**characterized in that** the circuitry (14) arranged in the housing (12) comprises a further electrical element (28) which is configured to extract energy for its own operation from an electrical signal applied to the first, the third, the fifth and/or the sixth terminal (201, 203, 205, 206).

2. The safety switching device of claim 1, wherein the electrical signal is the first input signal and/or the second input signal.

3. The safety switching device of claim 1 or 2, wherein the electrical signal is a potential that is switched by the switching elements (16).

4. The safety switching device of any one of claims 1 to 3, wherein the electrical signal is electrically isolated from the further electrical element (28).

5. The safety switching device of any one of claims 1 to 4, wherein the further electrical element (28) is an indicator, in particular an LED, indicating an operating state of the safety switching device and/or a status of one of the switching elements (16).

6. The safety switching device of any one of claims 1 to 5, wherein the further electrical element (28) is an electronic element, in particular a microcontroller (31), and performs a safety-related task of the safety switching device (10).

7. The safety switching device of any one of claims 1 to 6, wherein the further electrical element (28) is electrically connected to the first, the third, the fifth and/or the sixth terminal (201, 203, 205, 206).

8. The safety switching device of any one of claims 1 to 7, further comprising: an electrical component connected to the further electrical element (28) and establishing a voltage and/or a current supply for operating the further electrical element (28).

9. The safety switching device of any one of claims 1 to 8, further comprising: an energy storage device that buffers the energy for operating the further electrical element (28), wherein the electrical signal charges the energy storage device.

10. The safety switching device of any one of claims 1 to 9, wherein a seventh terminal (207) is provided on the housing (12), to which a reference potential for the circuitry (14) can be connected.

11. The safety switching device of any one of claims 1 to 10, wherein the further electrical element (28) is powered exclusively from the energy extracted from the electrical signal.

12. The safety switching device of any one of claims 1 to 11, wherein the housing (12) has two side surfaces (68, 70) and a plurality of functional surfaces (72, 74, 76, 78) connecting the side surfaces, which together define an enclosed space in which the circuitry (14) is arranged, wherein a spacing of the side surfaces defines a maximum width (66) of the housing (12) and the terminals (20) are arranged on one of the functional surfaces (72, 74, 76, 78), in particular wherein the maximum width (66) is equal to or less than 22.5 mm.

13. The safety switching device of any one of claims 1 to 12, wherein the first, second, third and fourth terminals (201-204) located on the housing represent two safe outputs, each of which can interrupt the safety circuit (18), wherein six further terminals (207, 208; 214-217) are provided on the housing (12), which together form three further safe outputs.

14. The safety switching device of any one of claims 1 to 13, wherein the first input signal is a coded signal, in particular a signal of an output signal switching device, also known as an OSSD signal (50), and is provided by an output signal switching device (48) of a protective device, in particular a contactless protective device.

15. The safety switching device of any one of claims 1 to 14, wherein the terminals (20) of the safety switching device are screw terminals or spring terminals.

## Revendications

1. Appareil de commutation de sécurité (10) pour l'interruption de sécurité d'un circuit de sécurité (18), présentant :
un boîtier (12) et un équipement électronique (14) disposé dans le boîtier,
dans lequel l'équipement électronique (14) présente deux éléments de commutation (16) qui peuvent être disposés dans le circuit de sécurité (18) par l'intermédiaire de premier, deuxième, troisième et quatrième raccords (20 ; 201 - 204) se trouvant sur le boîtier (12) et qui ferment celui-ci de manière redondante lorsqu'un signal de commande est appliqué à chaque élément de commutation (16),
dans lequel un cinquième raccord (20 ; 205) et un sixième raccord (20 ; 206) sont prévus sur le boîtier (12), auxquels peuvent être appliqués un premier signal d'entrée et un second signal d'entrée qui correspondent aux signaux de commande des éléments de commutation (16), de sorte que, lorsque le premier et le second signal d'entrée sont appliqués au cinquième et au sixième raccord (205, 206), le circuit de sécurité (18) est fermé, et
**caractérisé en ce que** l'équipement électronique (14) disposé dans le boîtier (12) présente un élément électrique supplémentaire (28) qui est configuré pour prélever une énergie pour son propre fonctionnement d'un signal électrique appliqué aux premier, troisième, cinquième et/ou sixième raccords (201, 203, 205, 206).

2. Appareil de commutation de sécurité selon la revendication 1, dans lequel le signal électrique est le premier et/ou le second signal d'entrée.

3. Appareil de commutation de sécurité selon la revendication 1 ou 2, dans lequel le signal électrique est un potentiel à mettre en circuit par les éléments de commutation (16).

4. Appareil de commutation de sécurité selon l'une des revendications 1 à 3, dans lequel le signal électrique est séparé galvaniquement de l'élément électrique supplémentaire (28).

5. Appareil de commutation de sécurité selon l'une des revendications 1 à 4, dans lequel l'élément électrique supplémentaire (28) est un indicateur, en particulier une DEL, qui indique un état de fonctionnement de l'appareil de commutation de sécurité et/ou un état de l'un des éléments de commutation (16).

6. Appareil de commutation de sécurité selon l'une des revendications 1 à 5, dans lequel l'élément électrique supplémentaire (28) est un élément électronique, en particulier un microcontrôleur (31), et assure une tâche de sécurité de l'appareil de commutation de sécurité (10).

7. Appareil de commutation de sécurité selon l'une des revendications 1 à 6, dans lequel l'élément électrique supplémentaire (28) est connecté électriquement aux premier, troisième, cinquième et/ou sixième raccords (201, 203, 205, 206).

8. Appareil de commutation de sécurité selon l'une des revendications 1 à 7, présentant en outre : un composant électrique qui est connecté à l'élément électrique supplémentaire (28) et qui établit une alimentation en tension et/ou en courant pour le fonctionnement de l'élément électrique supplémentaire (28).

9. Appareil de commutation de sécurité selon l'une des revendications 1 à 8, présentant en outre : un accumulateur d'énergie qui amortit l'énergie pour le fonctionnement de l'élément électrique, dans lequel le signal électrique charge l'accumulateur d'énergie.

10. Appareil de commutation de sécurité selon l'une des revendications 1 à 9, dans lequel est prévu sur le boîtier (12) un septième raccord (207) auquel peut être raccordé un potentiel de référence pour l'équipement électronique (14).

11. Appareil de commutation de sécurité selon l'une des revendications 1 à 10, dans lequel l'élément électrique supplémentaire (28) est alimenté exclusivement à partir de l'énergie prélevée du signal électrique.

12. Appareil de commutation de sécurité selon l'une des revendications 1 à 11, dans lequel le boîtier (12) présente deux surfaces latérales (68, 70) ainsi que plusieurs surfaces fonctionnelles (72, 74, 76, 78) reliant les surfaces latérales, lesquelles définissent ensemble un espace intérieur fermé dans lequel est disposé l'équipement électronique (14), dans lequel une distance entre les surfaces latérales définit une largeur maximale (66) du boîtier (12), en particulier égale ou inférieure à 22,5 mm, et les raccords (20) sont disposés sur l'une des surfaces fonctionnelles (72, 74, 76, 78).

13. Appareil de commutation de sécurité selon l'une des revendications 1 à 12, dans lequel les premier, deuxième, troisième et quatrième raccords (201 - 204) situés sur le boîtier représentent deux sorties de sécurité qui peuvent respectivement interrompre le circuit de sécurité (18), dans lequel six raccords supplémentaires (207, 208 ; 214 - 217) sont prévus sur le boîtier (12), lesquels forment ensemble trois sorties de sécurité supplémentaires.

14. Appareil de commutation de sécurité selon l'une des revendications 1 à 13, dans lequel le premier signal d'entrée est un signal codé, en particulier un signal provenant d'un appareil de commutation de signal de sortie, également appelé signal OSSD (50), et est fourni par un appareil de commutation de signal de sortie (48) d'un équipement de protection, en particulier d'un équipement de protection sans contact.

15. Appareil de commutation de sécurité selon l'une des revendications 1 à 14, dans lequel les raccords (20) de l'appareil de commutation de sécurité sont des serrages à vis ou à ressort.
